# EUROPEAN PATENT APPLICATION

(11) **EP 4 474 177 A1**
(43) Date of publication of application: **11.12.2024**
(21) Application number: 24178652.4
(22) Date of filing: 29.05.2024
(51) Int. Cl.: B60G 11/27, F16F 9/04

(54) **SLEEVE FOR AIR SPRING FOR VEHICLE**

(30) Priority: 05.06.2023 KR 20230072335; 27.09.2023 KR 20230131036
(71) Applicant: Iljin Co., Ltd., Gyeongju-si, Gyeongsangbuk-do 38073 (KR)
(72) Inventor: Jeong, Sewoong, 44754 Ulsan (KR); Seo, Jonghyung, 05763 Seoul (KR); Kim, Byunghwan, 44978 Ulsan (KR); Kim, Sangwoo, 52039 Gyeongsangnam-do (KR)
(74) Representative: BCKIP Part mbB

(57) **Abstract**

A sleeve for an air spring for a vehicle includes at least a first sleeve (520) and a second sleeve (540). The first sleeve has both open ends and includes a first circumferential portion (522) and a second circumferential portion (524), the second sleeve has one open end and includes a third circumferential portion (542) coupled to the second circumferential portion of the first sleeve, and an end opposite the one open end of the second sleeve is formed in a closed structure (544).

## Description

### CROSS-REFERENCE TO RELATED APPLICATIONS

This application claims priority to Korean Patent Application No. 10-2023-0072335 filed on June 5, 2023 and Korean Patent Application No. 10-2023-0131036 filed on September 27, 2023.

### TECHNICAL FIELD

The present disclosure relates to a sleeve for an air spring for a vehicle, and more specifically, to a sleeve for an air spring for a vehicle which has improved durability and is capable of being implemented with reduced manufacturing costs by using simplified parts.

### BACKGROUND

A suspension for a vehicle is provided between a vehicle body and a wheel to connect the vehicle body and the wheel as rigid bodies by one or multiple links. The suspension is supported by a spring, a shock absorber and the like in a vertical direction, and serves to appropriately balance a mechanical relative movement between the vehicle body and the wheel by appropriately combining high rigidity and flexibility in other directions.

The suspension needs to satisfy the following basic conditions. That is, the suspension needs to effectively block irregular inputs generated from a road surface when the vehicle is travelling, thus providing a comfortable ride quality to passengers. The suspension needs to provide driving convenience by appropriately control the shaking of the vehicle body caused by a driving behavior of a driver and unevenness of the road surface. Further, when the vehicle travels on the unevenness road surface, the suspension needs to maintain a vertical load acting on each tire at a contact surface with the unevenness road surface at an appropriate level, thus ensuring the driving operation and stability of the vehicle during turning and braking.

In order to satisfy such conditions, various types of suspensions have been developed and applied to vehicles. In recent years, an air suspension has been widely applied to a deluxe vehicle. The air suspension improves the ride quality by changing a constant of an air spring to change a volume of a sleeve constituting the air spring, and automatically maintains a height of the vehicle by changing an amount of air.

However, such a sleeve is attached to surrounding parts. Air may leak from a portion where the sleeve is attached to the surrounding parts, which may cause the air spring to break down. This may deteriorate the durability of the air spring.

### [Document in Related Art]

### [Patent Document]

(Patent Document 0001) European Patent No. 2,090,801 (January 26, 2009)

### SUMMARY

The present disclosure was made to solve the above-mentioned matters, and the present disclosure is for the purpose of providing a sleeve for an air spring for a vehicle which has improved durability and is capable of being implemented with reduced manufacturing costs by using simplified parts.

Further, the present disclosure is for the purpose of providing a sleeve for an air spring for a vehicle in which product performance may be improved by enhancing a degree of freedom in design.

Further, the present disclosure is for the purpose of providing a sleeve for an air spring for a vehicle in which the sleeve may be manufactured to be divided into a plurality of sleeves by injection molding to improve a flow of the injection molding of each sleeve and improve a quality of each sleeve.

According to an example embodiment of the present disclosure, a sleeve 500 for an air spring for a vehicle, may include at least a first sleeve 520 and a second sleeve 540. The first sleeve 520 may have both open ends and may include a first circumferential portion 522 and a second circumferential portion 524, the second sleeve 540 may have one open end and may include a third circumferential portion 542 coupled to the second circumferential portion 524 of the first sleeve 520, and an end opposite the one open end of the second sleeve 540 may be formed in a closed structure 544.

As an aspect, the first sleeve 520 may an upper sleeve, the second sleeve 540 may be a lower sleeve, the first circumferential portion 522 of the first sleeve 520 may be coupled to a top mount, and an outer surface of the closed structure 544 at the opposite end of the second sleeve 540 may be fixed to an end cap.

As an aspect, the closed structure 544 may include a circular plate 546 configured to close the end opposite the one end of the second sleeve 540.

As an aspect, the closed structure 544 may further include a reinforcement portion 548 formed to protrude from the circular plate 546. The reinforcement portion 548 may include at least one bar, and each of both ends of the at least bar may be connected to an inner surface of the second sleeve 540.

As an aspect, the at least one bar of the reinforcement portion 548 may include a plurality of bars, each of the plurality of bars may pass through a center of the circular plate, and points where the plurality of bars are connected to the inner surface of the second sleeve 540 may be arranged at equal intervals along a circumference of the inner surface.

As an aspect, one of the first sleeve 520 and the second sleeve 540 may be configured to encompass a region where a lobe is formed.

As an aspect, the first sleeve 520 and the second sleeve 540 may be made of a thermoplastic material by an injection molding.

As an aspect, the second circumferential portion 524 of the first sleeve 520 and the third circumferential portion 542 of the second sleeve 540 may be bonded to each other by a welding so that the second circumferential portion 524 is attached to the third circumferential portion 542.

As an aspect, the second circumferential portion 524 of the first sleeve 520 and the third circumferential portion 542 of the second sleeve 540 may be arranged to overlap each other, and a stepped portion 549 may be formed along a circumferential direction in one of the second circumferential portion 524 of the first sleeve 520 and the third circumferential portion 542 of the second sleeve 540 so that the first sleeve 520 is seated mounted on the second sleeve 540 or the second sleeve 540 is seated on the first sleeve 520.

As an aspect, the second circumferential portion 524 of the first sleeve 520 and the third circumferential portion 542 of the second sleeve 540 may have outwardly-extending flanges, respectively, and the outwardly-extending flanges may be bonded to each other by the welding such that the second circumferential portion 524 of the first sleeve 520 is attached to the third circumferential portion 542 of the second sleeve 540.

As an aspect, the second circumferential portion 524 of the first sleeve 520 and the third circumferential portion 542 of the second sleeve 540 may be arranged to overlap each other. The sleeve, which is arranged inwardly in a region where the second circumferential portion 524 and the third circumferential portion 542 overlap each other, may be made of a laser-energy absorbable material. The sleeve, which is arranged outwardly in the region, may be made of a laser-energy transmissible material. The welding may be a laser welding.

As an aspect, the sleeve for the air spring may further include an intermediate sleeve 660 interposed between the first sleeve 620 and the second sleeve 640. The intermediate sleeve 660 may have a fourth circumferential portion 662 and a fifth circumferential portion 664 at both ends of the intermediate sleeve 660, and the second circumferential portion 624 of the first sleeve 620 may be coupled to the fourth circumferential portion 662 of the intermediate sleeve 660, and the fifth circumferential portion 664 of the intermediate sleeve 660 is coupled to the third circumferential portion 642 of the second sleeve 640.

As an aspect, the first sleeve, which is arranged inwardly in the region, may include a carbon black. Further, the intermediate sleeve may include the carbon black.

According to an example embodiment of the present disclosure, a sleeve has a closed structure, and an outer surface thereof is coupled to an end cap. This makes it possible to suppress compressed air within the sleeve from leaking and improve durability of the sleeve. Further, according to an example embodiment of the present disclosure, the number of parts may be reduced, which makes it possible to facilitate assembly and save manufacturing costs.

Further, according to an example embodiment of the present disclosure, a sleeve is molded to be divided into a plurality of independent sleeves by injection molding, which makes it possible to improve durability and enhance manufacturing efficiency. Further, it is possible to enhance a degree of freedom in design and improve product performance.

Further, according to an example embodiment of the present disclosure, by manufacturing a sleeve to be divided into a plurality of sleeves by injection molding, it is possible to improve a flow of the injection molding of each sleeve and improve a quality of each sleeve.

### BRIEF DESCRIPTION OF THE DRAWINGS

FIG. 1 is a perspective view of a sleeve according to an example embodiment of the present disclosure.
FIG. 2 is an exploded perspective view of the sleeve illustrated in FIG. 1.
FIG. 3 is a cross-sectional view of the sleeve illustrated in FIG. 1.
FIG. 4 is a perspective view of a second sleeve when viewed from an upper surface of a closed structure.
FIG. 5 is a perspective view of the second sleeve when viewed from a lower surface of a closed structure.
FIG. 6 is a cross-sectional view of a sleeve according to another example embodiment of the present disclosure.

### DETAILED DESCRIPTION

Various modifications may be added to example embodiments of the present disclosure. Specific example embodiments will be described with reference to the drawings. However, the present disclosure is not limited to the specific example embodiments but should be understood as including various modifications, equivalents or alterations, which fall within the scope and the technical sprit of the present disclosure. In descriptions of the drawings, like reference numerals will refer to the same or similar constituent elements. Further, although the terms such as a "first," a "second," "A," and the like used herein may be used to explain various constituent elements, such constituent elements should not be limited by such terms. The above terms may be used to distinguish a constituent element from another constituent element. For example, a first constituent element may be named as a second constituent element in another description of the specification without departing from the scope of the present disclosure. Conversely, the second constituent element may be named as the first constituent element in another description of the specification. The term "and/or" may be used to represent a combination of a plurality of related items described herein or at least one of the plurality of related items. Further, when a constituent element is referred to as being "coupled" or "connected" to another constituent element, the constituent element may be directly coupled or directly connected to the another constituent element, but yet another constituent element may be provided between the constituent element and the another constituent element. Further, when a constituent element is referred to as being "directly coupled" or "directly connected" to another constituent element, yet another constituent element may not be provided between the constituent element and the another constituent element. The terms used herein are merely used to describe specific example embodiments and do not limit the present disclosure. Expressions in the singular form should be understood to encompass expressions in the plural form unless the context clearly indicates otherwise. The term "includes," "has" or the like are intended to include features, numeric characters, operations, operations, constituent elements, parts, or a combination thereof, and should be understood not to exclude one or more other features, numeric characters, operations, operations, constituent elements, parts, or a combination thereof, or additional features and the like. Terms a "first," a "second," and the like are used to distinguish a plurality of constituent elements from each other, and the order or importance of corresponding constituent elements is not limited by these terms. Unless otherwise defined, all technical and scientific terms used herein have the same meaning commonly understood by those skilled in the art to which the present disclosure pertains. In addition, the commonly-used predefined terms should be interpreted as consistent with the meanings of the context in the related art and should not be interpreted as having ideal or excessive formal meanings unless otherwise defined in this application. Further, the term "about" used herein should be understood to include a manufacturing tolerance range in the technical field to which the present disclosure pertains.

When one constituent element "comprise or includes" another constituent element through the specification and the claims, this means that the one constituent element may further include other constituent elements, rather than excluding other constituent elements, unless other stated. Hereinafter, preferred example embodiments of the present disclosure will be described in detail with reference to the accompanying drawings.

An air spring may be arranged between a top mount and an end cap to act as a spring. For example, the air spring may include a housing and a sleeve.

According to an example embodiment of the present disclosure, one end of the sleeve may be hermetically fixed to the top mount and the other end thereof is hermetically fixed to the end cap. The sleeve may be enclosed by the housing.

As an example, the sleeve is an air bag whose volume may vary with up and down movements of the top mount and the end cap. That is, the volume of the sleeve, which has a constant internal pressure, varies with the up and down movement. With the variation in the internal pressure, the sleeve acts as the spring.

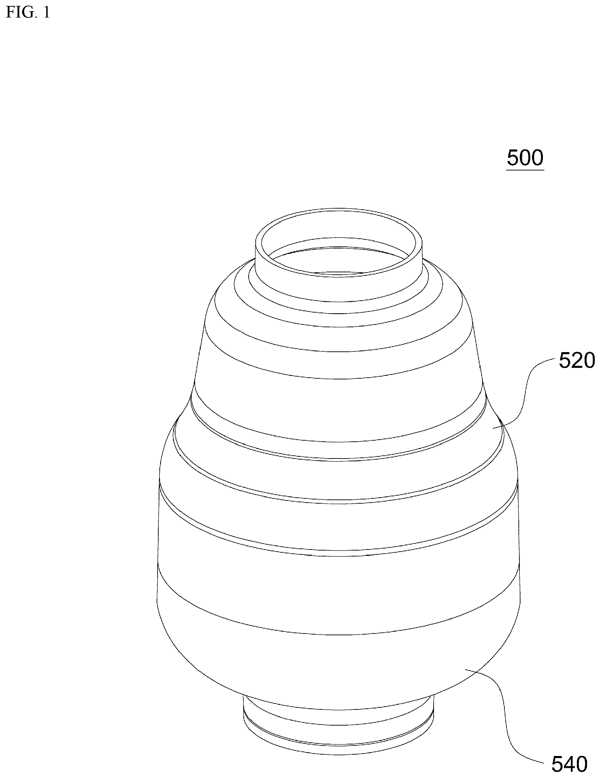

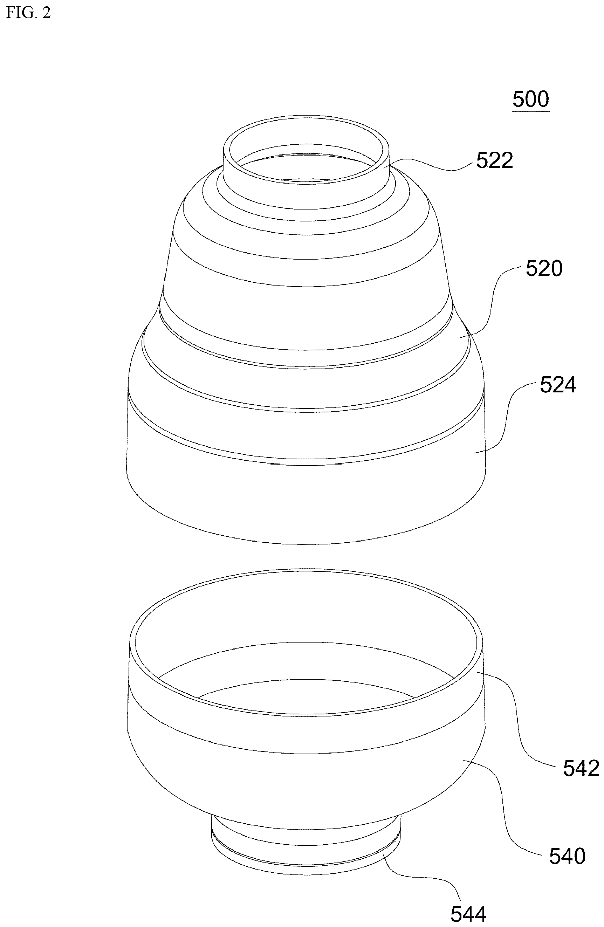

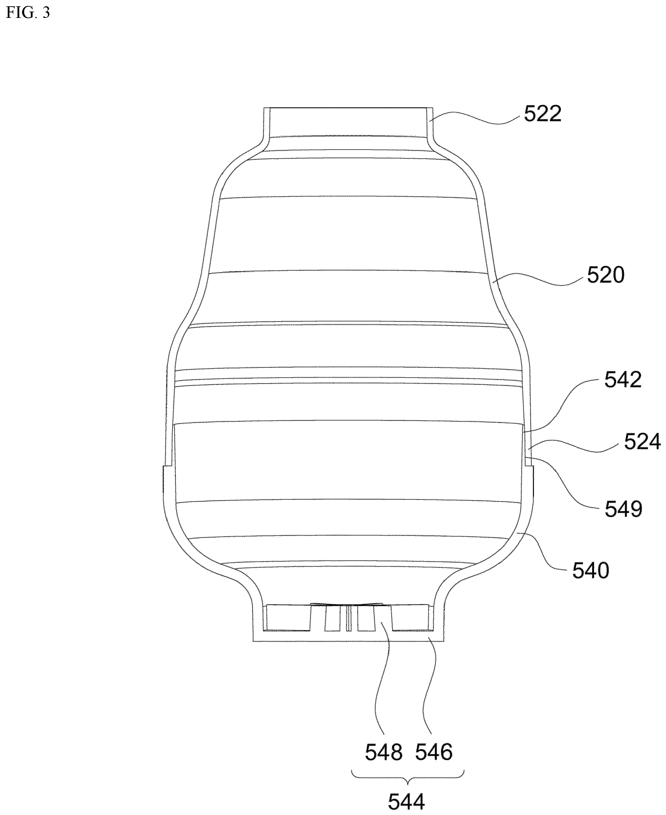

FIG. 1 is a perspective view of a sleeve according to an example embodiment of the present disclosure. The sleeve illustrated in FIG. 1 is a sleeve before being mounted to a top mount and an end cap to form a lobe. FIG. 2 is an exploded perspective view of the sleeve illustrated in FIG. 1. FIG. 3 is a cross-sectional view of the sleeve illustrated in FIG. 1.

As illustrated in FIGS. 1 to 3, for example, a sleeve 500 for an air spring for a vehicle according to an example embodiment of the present disclosure may include at least a first sleeve 520 and a second sleeve 540. As an example, the first sleeve 520 may be an upper sleeve and the second sleeve 540 may be a lower sleeve.

The first sleeve 520 may have both open ends and may include a first circumferential portion 522 and a second circumferential portion 524. The first circumferential portion 522 of the first sleeve 520 may be coupled to a top mount.

The second sleeve 540 may have one open end and may include a third circumferential portion 542. The second circumferential portion 524 of the first sleeve 520 may be coupled to the third circumferential portion 542 of the second sleeve 540. An end opposite the one open end of the second sleeve 540 is formed in a closed structure 544. An outer surface of the closed structure 544 at the opposite end of the second sleeve 540 may be coupled to an end cap (not illustrated) (which may be a wheel-side member).

Accordingly, in the present disclosure, the opposite end of the second sleeve 540 does not have an open structure and is not coupled to the end cap. The outer surface of the second sleeve 540, which has the closed structure 544, is coupled to the end cap.

In order to couple the opposite end of the second sleeve 540, which has an open structure, to the end cap, a separate member for such a coupling needs to be additionally assembled to the end cap. For example, the end cap does not have a structure to which welding may be applied. Thus, in order to hermetically couple the opposite end of the second sleeve 540, which has an open structure, to the end cap by the welding, the separate member to which the open end of the second sleeve 540 may be coupled by the welding, needs to be hermetically assembled to the end cap.

In the present disclosure, the opposite end of the second sleeve 540 is formed in the closed structure 544 and the outer surface of the closed structure 544 is coupled to the end cap. This makes it possible to suppress compressed air within the sleeve from leaking and improve durability of the sleeve. Further, the number of parts may be reduced, which makes it possible to facilitate assembly and save manufacturing costs.

In FIG. 2, the second sleeve 540 out of the first sleeve 520 and the second sleeve 540 is configured to encompass an area where the rolling lobe is formed. Alternatively, the second sleeve 540 may be configured to encompass the area where the rolling lobe is formed.

In the present disclosure, the sleeve 500 may be manufactured to be divided into one sleeve encompassing the area where the rolling lobe is formed, and another sleeve not encompassing the area. With this configuration, it is possible to improve a degree of freedom of design of the sleeve 500 and enhance manufacturing efficiency of the sleeve 500 while satisfying high rigidity required for the sleeve 500.

For example, the first sleeve 520 and the second sleeve 540 may be made of the same material. Further, one of the first sleeve 520 and the second sleeve 540 not encompassing the area where the rolling lobe is formed, may be made of a material having a higher rigidity than that of the remaining one of the first sleeve 520 and the second sleeve 540. This is because that the material having the higher rigidity may not be suitable for forming the rolling lobe.

Further, the first sleeve 520 and the second sleeve 540 may be manufactured with a thermoplastic elastomer (TPE) material by injection molding.

Like in a general plastic material, the thermoplastic elastomer material may be molded and reused by injection, extrusion blow molding, or the like, and has an elastomeric property.

According to an example embodiment of the present disclosure, the first sleeve 520 and the second sleeve 540 may be manufactured independently of each other with the thermoplastic elastomer material by the injection molding, which improves a degree of freedom of design of each of the first sleeve 520 and the second sleeve 540. For example, the sleeve encompassing the area where the rolling lobe is formed, may be designed to have superiorities in rigidity and spring property by changing a thickness of the first sleeve in a longitudinal direction (as will be described later).

In addition, the flow of the injection molding of the sleeve 500 may also be improved. The sleeve 500 according to an example embodiment of the present disclosure may be designed to have different inner diameters in the longitudinal direction. This causes deterioration in the flow of the injection molding when the injection molding is performed to form a single sleeve, which makes it difficult to manage the quality of the sleeve. In the present disclosure, since the sleeve 500 is manufactured to be divided into the first sleeve 520 and the second sleeve 540, it is possible to improve the flow of the injection molding.

According to an example embodiment of the present disclosure, the second circumferential portion 524 of the first sleeve 520 and the third circumferential portion 542 of the second sleeve 540 are welded to each other such that the second circumferential portion 524 of the first sleeve 520 is attached to the third circumferential portion 542 of the second sleeve 540.

For example, the second circumferential portion 524 of the first sleeve 520 may be attached to the third circumferential portion 542 of the second sleeve 540 by positioning the first sleeve 520 and the second sleeve 540 (a butt j oint) such that an end of the second circumferential portion 524 of the first sleeve 520 and an end of the third circumferential portion 542 of the second sleeve 540 face each other, and by welding such mutually-facing portions of the first sleeve 520 and the second sleeve 540 to each other.

More preferably, according to an example embodiment of the present disclosure, as illustrated in FIG 3, the second circumferential portion 524 of the first sleeve 520 and the third circumferential portion 542 of the second sleeve 540 may be arranged to overlap each other. By welding such an overlapping region, the second circumferential portion 524 of the first sleeve 520 may be attached to the third circumferential portion 542 of the second sleeve 540.

Further, in order to support the welding, a stepped portion may be formed along a circumferential direction in one of the second circumferential portion 524 of the first sleeve 520 and the third circumferential portion 542 of the second sleeve 540 such that the first sleeve 520 (or the second sleeve 540) is seated on the second sleeve 540 (or the first sleeve 520). As an example, in FIG. 3, a stepped portion 549 is illustrated as being formed in the third circumferential portion 542 of the second sleeve 540 along the circumferential direction.

Further, according to an example embodiment of the present disclosure, the first sleeve 520 and the second sleeve 540 may be bonded to each other in the overlapping region by laser welding. That is, the second circumferential portion 524 of the first sleeve 520 and the third circumferential portion 542 of the second sleeve 540 may be bonded to each other by laser welding along the circumferential direction. To support this, as an example, the sleeve arranged inwardly may be made of a laser-energy absorbable material, and the sleeve arranged outwardly may be made of a laser-energy transmissible material. The sleeve arranged inwardly may include a carbon black as an example of a laser-energy absorbable material.

Further, according to an example embodiment of the present disclosure, the second circumferential portion 524 of the first sleeve 520 and the third circumferential portion 542 of the second sleeve 540 may have outwardly-extending flanges, respectively.

The flanges may be arranged to face each other and be in contact with each other. By welding the flanges, the second circumferential portion 524 of the first sleeve 520 may be attached to the third circumferential portion 542 of the second sleeve 540.

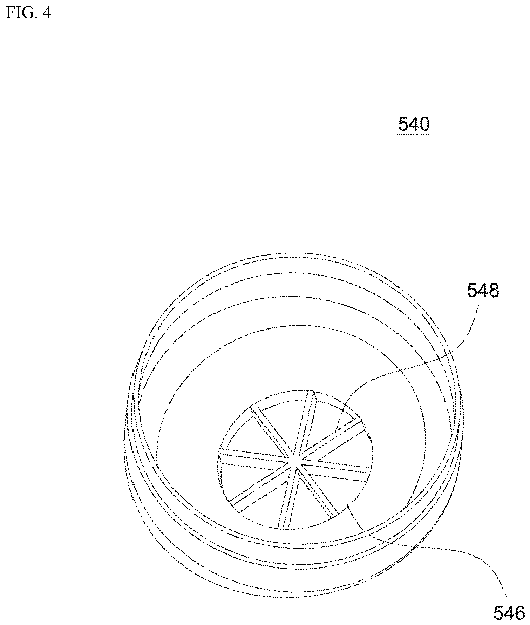

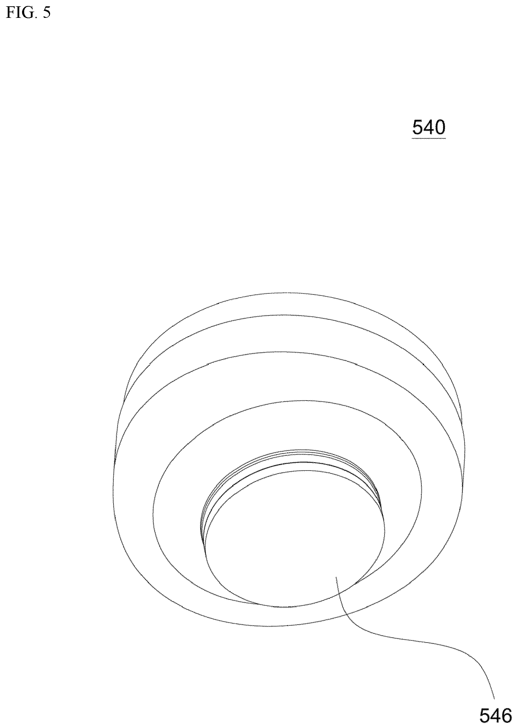

FIG. 4 is a perspective view of the second sleeve when viewed from an upper surface of the closed structure. FIG. 5 is a perspective view of the second sleeve when viewed from a lower surface of the closed structure.

Referring to FIGS. 4 and 5, according to an example embodiment of the present disclosure, the closed structure 544 may include a circular plate 546 configured to close the end opposite the one end of the second sleeve 540.

Further, as an example, the closed structure 544 may further include a reinforcement portion 548 formed to protrude from the circular plate 546. The reinforcement portion 548 may include at least one bar. Each of both ends of the at least bar may be connected to an inner surface of the second sleeve 540. The at least one bar may include a plurality of bars. Each of the plurality of bars may pass through a center of the circular plate 546. Points where the plurality of bars are connected to the inner surface of the second sleeve 540 may be arranged at equal intervals along a circumference of the inner surface.

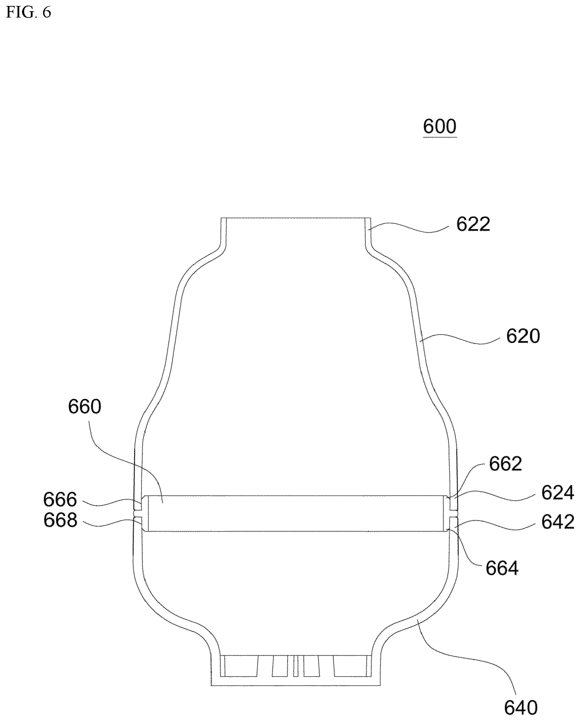

FIG. 6 is a cross-sectional view of a sleeve according to another example embodiment of the present disclosure.

Referring to FIG. 6, a sleeve 600 according to an example embodiment of the present disclosure may further include an intermediate sleeve 660 interposed between a first sleeve 620 and a second sleeve 640. As an example, a second circumferential portion 624 of the first sleeve 620 may be coupled to a fourth circumferential portion 662 of the intermediate sleeve 660, and a fifth circumferential portion 664 of the intermediate sleeve 660 may be coupled to a third circumferential portion 642 of the second sleeve 640. A first circumferential portion 622 of the first sleeve 620 may be coupled to the top mount.

As an example, the second circumferential portion 624 of the first sleeve 620 and the fourth circumferential portion 662 of the intermediate sleeve 660 are welded such that the second circumferential portion 624 of the first sleeve 620 is attached to the fourth circumferential portion 662 of the intermediate sleeve 660. The fifth circumferential portion 664 of the intermediate sleeve 660 and the third circumferential portion 642 of the second sleeve 640 are welded such that the fifth circumferential portion 664 of the intermediate sleeve 660 may be attached to the third circumferential portion 642 of the second sleeve 640.

For example, the second circumferential portion 624 of the first sleeve 620 may be attached to the fourth circumferential portion 662 of the intermediate sleeve 660 by positioning such that an end of the second circumferential portion 624 of the first sleeve 620 and an end of the fourth circumferential portion 662 of the intermediate sleeve 660 face each other, and by welding the first sleeve 620 and the intermediate sleeve 660 in mutually-facing portions.

With this configuration, a degree of freedom in design of the sleeve 600 of the present disclosure may be further improved. For example, the first sleeve 620 and the second sleeve 640 may be manufactured independently of each other with different materials. In a structure in which the first sleeve 620 and the second sleeve 640 are bonded to each other, a degree of freedom of material selection may be limited for bonding. Meanwhile, in a case where the intermediate sleeve 660 is interposed between the first sleeve 620 and the second sleeve 640, even if a material that is not easy to bond the first sleeve 620 and the second sleeve 640 is selected, the first sleeve 620 and the second sleeve 640 may be easily bonded to each other by the intermediate sleeve 660.

More preferably, according to an example embodiment of the present disclosure, as illustrated in FIG. 6, the second circumferential portion 624 of the first sleeve 620 and a fourth circumferential portion 662 of the intermediate sleeve 660 may be arranged to overlap each other, and the fifth circumferential portion 664 of the intermediate sleeve 660 and the third circumferential portion 642 of the second sleeve 640 may be arranged to overlap each other. In this case, a stepped portion 666 may be further formed along the circumferential direction in one of the fourth circumferential portion 662 of the intermediate sleeve 660 and the second circumferential portion 624 of the first sleeve 620 such that the intermediate sleeve 660 (or the first sleeve 620) is seated on the first sleeve 620 (or the intermediate sleeve 660). A stepped portion 668 may be further formed along the circumferential direction in one of the fifth circumferential portion 664 of the intermediate sleeve 660 and the third circumferential portion 642 of the second sleeve 640 such that the intermediate sleeve 660 (or the second sleeve 640) is seated on the second sleeve 640 (or the intermediate sleeve 660). In FIG. 6, as an example, the stepped portions 666 and 668 are illustrating as being formed on the fourth circumferential portion 662 of the intermediate sleeve 660 and the fifth circumferential portion 664 of the intermediate sleeve 660

The second circumferential portion 624 of the first sleeve 620 and the fourth circumferential portion 662 of the intermediate sleeve 660 are arranged to overlap each other. By welding such a mutually-overlapping region, the second circumferential portion 624 of the first sleeve 620 is attached to the fourth circumferential portion 662 of the intermediate sleeve 660. Similarly, the fifth circumferential portion 664 of the intermediate sleeve 660 and the third circumferential portion 642 of the second sleeve 640 are arranged to overlap each other. By welding such mutually-overlapping regions, the fifth circumferential portion 664 of the intermediate sleeve 660 may be attached to the third circumferential portion 642 of the second sleeve 640. As an example, in FIG. 6, the intermediate sleeve 660 is arranged inward in the overlapping region, and the first sleeve 620 and the second sleeve 640 are arranged outward in the overlapping region. In such an arrangement structure, in a case where the intermediate sleeve 660 and the first sleeve 620 or the second sleeve 640 are welded by laser, the intermediate sleeve 660 may be made of a laser-energy absorbable material (for example, carbon black), and the first sleeve 620 and the second sleeve 640 may be made of a laser-energy transmissible material.

Further, according to an example embodiment of the present disclosure, the second circumferential portion 624 of the first sleeve 620 and the fourth circumferential portion 662 of the intermediate sleeve 660 may be configured to have outwardly-extending flanges, respectively. By arranging the flanges to face each other and be in contact with each other and by welding the flanges, the second circumferential portion 624 of the first sleeve 620 may be attached to the fourth circumferential portion 662 of the intermediate sleeve 660.

Similarly, the fifth circumferential portion 664 of the intermediate sleeve 660 and the third circumferential portion 642 of the second sleeve 640 may be configured to have outwardly-extending flanges, respectively. By arranging the flanges to face each other and be in contact with each other and by welding the flanges, the fifth circumferential portion 664 of the intermediate sleeve 660 may be attached to the third circumferential portion 642 of the second sleeve 640.

### EXPLANATION OF REFERENCE NUMERALS

500, 600: Sleeve
520: First sleeve
540: Second sleeve
660: Intermediate sleeve

## Claims

1. A sleeve (500) for an air spring for a vehicle, comprising:
at least a first sleeve (520) and a second sleeve (540),
wherein the first sleeve (520) has both open ends and includes a first circumferential portion (522) and a second circumferential portion (524);
wherein the second sleeve (540) has one open end and includes a third circumferential portion (542) coupled to the second circumferential portion (524) of the first sleeve (520); and
wherein an end opposite the one open end of the second sleeve (540) is formed in a closed structure (544).

2. The sleeve for the air spring for a vehicle of Claim 1, wherein the first sleeve (520) is an upper sleeve, and the second sleeve (540) is a lower sleeve,
wherein the first circumferential portion (522) of the first sleeve (520) is coupled to a top mount, and
wherein an outer surface of the closed structure (544) at the opposite end of the second sleeve (540) is coupled to an end cap.

3. The sleeve for the air spring for a vehicle of Claim 2, wherein the closed structure (544) includes a circular plate (546) configured to close the end opposite the one end of the second sleeve (540).

4. The sleeve for the air spring for a vehicle of Claim 3, wherein the closed structure (544) further includes a reinforcement portion (548) formed to protrude from the circular plate (546).

5. The sleeve for the air spring for a vehicle of Claim 4, wherein the reinforcement portion (548) includes at least one bar, and
wherein each of both ends of the at least one bar is connected to an inner surface of the second sleeve (540).

6. The sleeve for the air spring for a vehicle of Claim 5, wherein the at least one bar of the reinforcement portion (548) includes a plurality of bars,
wherein each of the plurality of bars passes through a center of the circular plate, and
wherein points where the plurality of bars are connected to the inner surface of the second sleeve (540) are arranged at equal intervals along a circumference of the inner surface.

7. The sleeve for the air spring for a vehicle of any one of the preceding Claims, wherein one of the first sleeve (520) and the second sleeve (540) is configured to encompass a region where a lobe is formed.

8. The sleeve for the air spring for a vehicle of any one of the preceding Claims, wherein the first sleeve (520) and the second sleeve (540) are made of a thermoplastic material by an injection molding.

9. The sleeve for the air spring for a vehicle of any one of the preceding Claims, wherein the second circumferential portion (524) of the first sleeve (520) and the third circumferential portion (542) of the second sleeve (540) are bonded to each other by a welding so that the second circumferential portion (524) is attached to the third circumferential portion (542).

10. The sleeve for the air spring for a vehicle of Claim 9, wherein the second circumferential portion (524) of the first sleeve (520) and the third circumferential portion (542) of the second sleeve (540) are arranged to overlap each other, and
wherein a stepped portion (549) is formed in one of the second circumferential portion (524) of the first sleeve (520) and the third circumferential portion (542) of the second sleeve (540) along a circumferential direction so that the first sleeve (520) is seated on the second sleeve (540) or the second sleeve (540) is seated on the first sleeve (520).

11. The sleeve for the air spring for a vehicle of Claim 9, wherein the second circumferential portion (524) of the first sleeve (520) and the third circumferential portion (542) of the second sleeve (540) have outwardly-extending flanges, respectively, and
wherein the outwardly-extending flanges are bonded to each other by the welding such that the second circumferential portion (524) of the first sleeve (520) is attached to the third circumferential portion (542) of the second sleeve (540).

12. The sleeve for the air spring for a vehicle of any one of Claims 9 to 11, wherein the second circumferential portion (524) of the first sleeve (520) and the third circumferential portion (542) of the second sleeve (540) are arranged to overlap each other,
wherein the sleeve, which is arranged inwardly in a region where the second circumferential portion (524) and the third circumferential portion (542) overlap each other, is made of a laser-energy absorbable material,
wherein the sleeve, which is arranged outwardly in the region, is made of a laser-energy transmissible material, and
wherein the welding is a laser welding.

13. The sleeve for the air spring for a vehicle of any one of Claims 1 to 8, further comprising: an intermediate sleeve (660) interposed between the first sleeve (620) and the second sleeve (640),
wherein the intermediate sleeve (660) has a fourth circumferential portion (662) and a fifth circumferential portion (664) at both ends of the intermediate sleeve (660), and
wherein the second circumferential portion (624) of the first sleeve (620) is coupled to the fourth circumferential portion (662) of the intermediate sleeve (660), and the fifth circumferential portion (664) of the intermediate sleeve (660) is coupled to the third circumferential portion (642) of the second sleeve (640).

14. The sleeve for the air spring for a vehicle of Claim 12, wherein the sleeve, which is arranged inwardly in the region, includes a carbon black.

15. The sleeve for the air spring for a vehicle of Claim 13, wherein the intermediate sleeve includes a carbon black.
